# EUROPÄISCHE PATENTSCHRIFT

(11) **EP 2 951 450 B1**
(45) Veröffentlichungstag und Bekanntmachung des Hinweises auf die Patenterteilung: **05.04.2017**
(21) Anmeldenummer: 14717065.8
(22) Anmeldetag: 04.02.2014
(51) Int. Cl.: F16B 47/00, A47G 1/17

(54) **LÖSBARE UNTERDRUCKHALTEVORRICHTUNG**
DETACHABLE FIXING DEVICE WITH SUCTION CUP
DISPOSITIF DE FIXATION AMOVIBLE À VENTOUSE

(30) Priorität: 04.02.2013 DE 102013101100
(43) Veröffentlichungstag der Anmeldung: 09.12.2015
(73) Patentinhaber: Schmidt, Patrick, 21218 Seevetal (DE)
(72) Erfinder: PÖTTERS, Gert, 21224 Rosengarten (DE); SCHMIDT, Patrick, 21218 Seevetal (DE)
(74) Vertreter: Müller Schupfner & Partner Patent- und Rechtsanwaltspartnerschaft mbB
(86) Internationale Anmeldenummer: PCT/DE2014/000039
(87) Internationale Veröffentlichungsnummer: WO 2014/117766

(56) Entgegenhaltungen:
- EP-A1- 1 770 285
- WO-A1-01/20177
- US-A- 6 045 111

## Beschreibung

Die Erfindung bezieht sich auf eine lösbare Unterdruckhaltevorrichtung zum Anbringen von Gegenständen an eine Anlagefläche, mit einer zur Anlagefläche hin offenen Unterdruckkammer, in der nach dem Anlegen an die Anlagefläche mittels einer ein Vakuum erzeugenden Saugvorrichtung ein Unterdruck erzeugbar ist.

Eine mit Unterdruck arbeitende, wieder lösbare Haltevorrichtung ist aus der WO 01/20177 A1 bekannt. Diese Haltevorrichtung besitzt einen Haltekörper, der mittels einer Dichtung aus elastischem Material an eine gasundurchlässige Anlagefläche luftdicht anlegbar ist und an dem Vorrichtungen für verschiedene Tragefunktionen montierbar sind. Der Haltekörper weist eine zur Anlagefläche hin offene Unterdruckkammer mit einer elastischen Dichtung zur Anlagefläche hin und zur Unterdruckkammer hin ein Ventil auf, über das mittels einer Saugvorrichtung in der Unterdruckkammer ein Unterdruck erzeugbar ist, wenn der Haltekörper an die Anlagefläche angelegt ist. Die Haltevorrichtung kann mittels der Tragefunktionen beispielsweise Badezimmerzubehör, wie Seifenschalen oder Aufhänghaken, an Kachelwänden festhalten. Nach dem Öffnen des Ventils ist die Haltevorrichtung wieder abnehmbar.

Die EP 1 770 285 A1 offenbart eine Unterdruckhaltevorrichtung zum Anbringen von Gegenständen an eine im Wesentlichen gasdichte Anlagefläche, die einen den äußeren Haltekörperrand bildenden Andrucksteg, eine den Andrucksteg umgreifende Dichtung mit U-förmigem Profil und einen inneren Randsteg aufweist.

Es ist Aufgabe der Erfindung eine lösbare Haltevorrichtung für das Anbringen an Wänden zu schaffen, die eine verbesserte Dichtung aufweist, die ein verbessertes Anliegen des Haltekörpers an der Anlagefläche herbeiführt, gasdichter ist und ein Anlegen auch an raue Oberflächen erlaubt.

Die gestellte Aufgabe ist erfindungsgemäß durch den Gegenstand des Anspruches 1 gelöst. Vorteilhafte Ausgestaltungen sind Gegenstand der Unteransprüche oder nachfolgend beschrieben.

Die Unterdruckhaltevorrichtung zum Anbringen von Gegenständen an eine im Wesentlichen gasdichte Anlagefläche (8) weist auf:
- einen Haltekörper, der eine Unterdruckkammer ausbildet, wobei in der Unterdruckkammer nach dem Anlegen an die Anlagefläche ein Unterdruck erzeugbar ist, und der Haltekörper einen die Unterdruckkammer umlaufenden Andrucksteg mit Stegvorderkante aufweist, wobei die Stegvorderkante zur Anlagefläche (8) hin gerichtet ist,
- zumindest eine Dichtung, die die Unterdruckkammer nach außen hin gasdicht gegen die Anlagefläche verschließt,
- zumindest eine Öffnung als Ende einer Verbindung von Unterdruckkammer mit äußerer Umgebung mit zumindest einem Ventil welches ein gasdichtes Schließen und Öffnen der Verbindung Unterdruckkammer mit äußerer Umgebung gewährleist, wobei
- der Haltekörper mit dem Andrucksteg bei Ausbildung eines Unterdrucks in der Unterdruckkammer an die Anlagefläche über die zur Anlagefläche hin vorgesehene Dichtung drückt,
- die Dichtung ein oder mehrere U-Profile aufweist, wobei zwei Schenkel und eine die Schenkel verbindende Fußfläche ein U-Profil bildet und die Schenkel den jeweiligen Andrucksteg des Haltekörpers beidseitig zumindest teilweise umgreifen und die Fußfläche die zumindest eine Stegvorderkante des Andruckstegs überspannt, wobei die zumindest eine Stegvorderkante auf die Fußfläche der Dichtung bei Unterdruck in Richtung auf die Anlagefläche abdichtend einwirkt, und
- der Haltekörper neben dem Andrucksteg einen nach unten ragenden Randsteg aufweist, der Randsteg den Andrucksteg umschließt und sich zwischen Andrucksteg und dem Randsteg eine Nut ausbildet, in die ein Schenkel der Dichtung eingreift.

Die Unterdruckhaltevorrichtung weist bevorzugt weiterhin auf:
- Mittel zum Herstellen einer lösbaren, im Wesentlichen gasdichten Kupplung von der nach oben gerichteten Öffnung mit einer Saugvorrichtung zum Erzeugen eines Unterdruckes.

Das Befestigen der Unterdruck-Haltevorrichtung mittels einer Vorrichtung zum Erzeugen eines Unterdruckes einer Anlagefläche umfasst folgende Schritte:
- Aufsetzen der Unterdruck-Haltevorrichtung auf der Anlagefläche,
- Herstellen einer lösbaren, im Wesentlichen gasdichten Kupplung von der nach außen gerichteten Öffnung der Unterdruck-Haltevorrichtung mit einer Vorrichtung zum Erzeugen eines Unterdrucks, z.B. einem Kolbensaugrohr,
- Erzeugen eines Unterdruckes in der Unterdruckkammer, z.B. durch Herausziehen des Saugkolbens aus dem Kolbensaugrohr bis der Saugkolben eine obere Öffnung passiert und Abnehmen der Vorrichtung zum Erzeugen eines Unterdruckes oder pumpen mit einer Unterdruckpumpe statt des Kolbensaugrohrs.

Die lösbare Haltevorrichtung weist eine im Profil U-förmige Dichtung auf, deren Schenkel den umlaufenden Andrucksteg des Haltekörpers übergreifen und die Fußfläche der Dichtung zur Ausbildung einer Unterdruckkammer an die Anlagefläche ansetzbar ist.

Die Anlagefläche ist z.B. eine Wandfläche. Wenn die Haltevorrichtung auf der Anlagefläche aufsitzt und Unterdruck in der Unterdruckkammer ausgebildet ist, wird die Abdichtung dadurch herbeigeführt, dass die Vorderkante des Andrucksteges, sich durch den Unterdruck verursacht, in die Fußfläche der Dichtung auf die Anlagefläche presst. Damit ist auf einfache Weise eine Abdichtung an der Anlagefläche gewährleistet.

Vorzugsweise sind der z.B. ringförmigen Randsteg und der Andrucksteg mit einem gleichmäßigen Abstand, ausbildend die Nut, ausgerichtet, vorzugsweise in etwa rechtwinkelig (z.B. 90° +/-10°) zur Andruckfläche.

Der Andrucksteg läuft zur Unterdruckkammer hin um, der Randsteg zum äußeren Umriss des Haltekörpers hin, wo sich der Plattenrand (10) befindet. Der Randsteg verdeckt die Dichtung zumindest teilweise und dient damit als Sichtabdeckung.

Nach einer weiteren bevorzugten Ausgestaltung der Erfindung ist vorgesehen, dass der Haltekörper zusätzlich zu dem Andrucksteg und dem Randsteg einen weiteren nach unten ragenden, umlaufenden, z.B. ringförmigen, Steg aufweist, nachfolgend kurz Kammersteg genannt. Der Kammersteg umschließt den Andrucksteg zum Kammerinneren hin. Vorzugsweise sind Andrucksteg und Kammersteg mit einem gleichmäßigen Abstand, ausbildend eine Nut, auf die Andruckfläche hin ausgerichtet, vorzugsweise in etwa rechtwinkelig (z.B. 90° +/- 10°) zur Andruckfläche. Der Andrucksteg läuft zur Unterdruckkammer hin um, der Randsteg zum Plattenrand des Haltekörpers hin.

Zwischen Randsteg und Andrucksteg und Andrucksteg und Kammersteg (wenn vorhanden) bildet sich jeweils eine umlaufende Nut aus, in die die Schenkel der im Profil U-förmigen Dichtung eingreifen, wobei die Fußfläche der Dichtung zur Ausbildung der Unterdruckkammer und Abdichtung zwischen Stegvorderkante des Andrucksteges und Anlagefläche festgepresst ist. Vorzugsweise weist der Haltekörper umlaufenden Randsteg, umlaufenden Andrucksteg und umlaufenden Kammersteg auf.

Die Nuten und Stege sind vorzugsweise ringförmig (rund) oder Oval ausgebildet.

Der Andrucksteg überragt vorzugsweise den Randsteg und den Kammersteg (soweit vorhanden) in seiner Längenausdehnung in Richtung auf die Anlagefläche. Die Stege sind vorzugsweise parallel bzw. (gleichmäßig) beabstandet zueinander ausgerichtet.

Der Andrucksteg hat jeweils unabhängig voneinander vorzugsweise eine Höhe von 2 bis 10 mm, insbesondere 2 bis 6 mm. Die Nuten sind vorzugsweise 1 bis 6 mm stark, insbesondere 1,5 bis 4 mm. Die Fußfläche hat vorzugsweise eine Materialstärke von 0,5 bis 3 mm insbesondere von 1,5 bis 2,5 mm im entspannten Zustand.

Die Dichtung ist vorzugsweise aus einem relativ weichen elastischen, insbesondere gummielastischem, Material gefertigt und weist insbesondere eine Härte von 10 bis 70 ShoreA, insbesondere 15 bis 30 ShoreA, besonders bevorzugt 15 bis 20 ShoreA auf. Geeignete Materialien für die Dichtung sind synthetische Kautschuke und thermoplastische Elastomere. Die Dichtung ist umlaufend ausgebildet und vorzugsweise als Dichtungsring ausgebildet.

Nach einer weiteren Ausgestaltung der Erfindung ist vorgesehen, dass zwei umlaufende im Profil U-förmige Dichtungen oder eine im Profil doppel-U-förmige, d.h. z.B. W-förmige, Dichtung vorgesehen ist, deren 3 oder 4 Schenkel in die umlaufenden Andruckstege einschiebbar sind, wobei z.B. zwei Andruckstege, ein Randsteg und ein Kammersteg oder z.B. zwei Andruckstege, ein Randsteg und ein Kammersteg und ein weiterer Steg zwischen den Andruckstegen gegeben sind.

Das U-Profil weist nicht notwendigerweise parallele Schenkel auf. Die Schenkel können auch schräg auf die Fußfläche zulaufen. Bevorzugt sind die Schenkel aber etwa parallel (z.B. 180° +/- 20°)zueinander ausgerichtet. Unabhängig hiervon bildet vorzugsweise ein oder bilden beide Schenkel jeweils einen etwa rechten Winkel (z.B. 90° +/- 10°) mit der Fußfläche und unabhängig hiervon stoßen die Schenkel vorzugsweis beanstandet voneinander auf die Fußfläche auf.

Zwei Dichtungen können zusätzlich den dauerhaften Erhalt des Vakuums unterstützen, und ermöglichen unabhängig voneinander die Verwendung weicherer Dichtungen oder die Ausbildung zweier getrennter Unterdruckkammern, welche über ein gemeinsames oder zwei Ventile angesteuert werden.

Vorzugsweise ist vorgesehen, dass die Schenkel der Dichtung die Nut zwischen zumindest zwei Stegen nicht vollständig ausfüllen, wenn die Dichtung auf den Haltekörper aufgeschoben ist und kein Andruck auf die Anlagefläche erfolgt. Eine ringförmige Dichtung kann beispielsweise, eingeschoben in die Nut, dann noch kreisförmig hin- und hergeschoben werden. Erst wenn sich durch den Unterdruck ein Andruck an die Anlagefläche ergibt, wird durch Stauchung der Dichtung bewirkt, dass sich ein Breitenwachstum der Dichtung ergibt und diese sich im Bereich Ihrer Schenkel an die Seitenwände der Rand- und/oder Kammerstegwände, und ggf. auch an die Seitenwände der Andruckstege, dicht fest anlegt, die jeweils der Nut zugeneigt sind.

Der Haltekörper der Unterdruck-Haltevorrichtung besteht vorzugsweise aus Kunststoff, z.B. aus einem schlagfesten Kunststoff, wie ABS (Acrylnitril-Butadien-Styrol), oder Polyamid und ist weiterhin zur Auflagefläche hin vorzugsweise rund bzw. oval ausgebildet.

Die Verbindung von Unterdruckkammer mit äußerer Umgebung ist vorzugsweise in Form eines Domes ausgebildet, der unabhängig hiervon eine vorzugsweise konusförmige Ausnehmung am oberen Ende aufweist in Form einer sich nach außen öffnenden (halb)kegel- oder (halb)kugelförmige Auflagefläche zur Aufnahme des Ventils.

Das Ventil ist, um ein sicheres Aufliegen zu gewährleisten, entsprechend der Auflagefläche des Doms vorzugsweise ebenfalls kegel-, halbkegel-, kugel- oder halbkugelförmig ausgebildet. Das Ventil fungiert als Absaug- / Dichtungsventil. Vorzugsweise wird das Ventil mit Hilfe elastischer Mittel, z.B. eines elastischen Bandes oder Stabes oder einer Feder, die einstückig Teil des Ventils sein können, ggf. unter Vorspannung, in der Auflagefläche gehalten. Es ist auch möglich das Ventil in einem Ventilkäfig festzuhalten.

Nach einer anderen Ausgestaltung ist das Ventil in Form eines lippenförmigen Spaltes ausgebildet, wobei die Lippen konusförmig zu einem Schlitz zusammenlaufen und sich bei Unterdruck zusammendrücken. Hierbei ist der Dom vorzugsweise so ausgebildet, dass er für das Ende des elastischen Mittels einen Halt bietet.

Z.B. kann das Ventil so ausgebildet sein, dass es sich zunächst kugel- oder kegelförmig nach unten verjüngt und hierbei nach unten band- oder stabartig weiter ausläuft. Am Ende des Bandes oder Stabes finden sich ein Widerhalt, der z.B. in Form einer oder mehrerer, vorzugsweise zweier, abstehender Zapfen, einem Querriegel, einer Kugel, eines Kegels (etc.) oder eines Keils ausgebildet sein kann.

Nach einer Ausgestaltung der Erfindung ist vorgesehen, dass die Saugvorrichtung mit einem Ventil versehen ist, dass bei einer Druck erzeugenden Bewegung des Kolbens der Saugvorrichtung einen Überdruck im Saugrohr durch Kompression und Entspannung über das Entlastungsventil entlüftet. Damit ist es möglich, mit mehreren Saughüben den Unterdruck ausreichend groß zu machen. Dies kann z.B. mit einer Hubkolbenpumpe erfolgen. Wenn man den Kolben bei aufgesetzter Haltevorrichtung niederdrückt, bildet sich im Saugrohr ein Luftstau. Um diesen zu vermeiden, entweicht etwaiger Überdruck über das Entlastungsventil. Nach einer anderen Ausgestaltung kann auch der Dichtungsring so gestaltet sein, dass er wie das Entlastungsventil Überdruck nach außen abgeben kann und die Saugvorrichtung bzw. Hubkolbenpumpe trotzdem nicht von der Halteaufnahme entfernt werden muss.

Die Saugvorrichtung kann auch nur einen Kolben und ein Kolbensaugrohr aufweisen, wobei dann das Kolbensaugrohr auf den Ventilsitz des Ventilkörpers aufgesetzt wird und das untere Ende des Kolbens aus dem Kolbensaugrohr gezogen wird. Durch das plötzliche Eintreten von Umgebungsluft über die obere Öffnung des Kolbensaugrohrs schließt das Ventil am Haltekörper.

Die Vorrichtung zum Erzeugen des Unterdruckes ist vorzugsweise eine manuelle, z.B. handbetätigte, Kolbensaugpumpe, die am Anfang und am Ende des Saugweges Öffnungen aufweist.

Die Kolbensaugpumpe weist eine Kolbenzugstange mit integrierter Zughaltevorrichtung auf und weiterhin einen Saugkolben, der vorzugsweise aus elastischem Material wie Gummi gefertigt ist und z.B. mit Dichtlippen gegen das Saugrohr abdichtet. Um die Kolbensaugpumpe auch in vertikaler Lage einsetzen zu können, kann die untere Öffnung des Saugrohrs auch winkelig mit der lösbaren Kupplung verbunden sein.

Ggf. kann die Kolbensaugpumpe mittig an der unteren Öffnung eine Vorrichtung, etwa einen Dorn, aufweisen, der verhindert dass das Ventil durch die Sogwirkung der Kolbensaugpumpe aus der Aufnahmefläche herausgehoben wird. Die Vorrichtung zum Erzeugen des Unterdruckes und die Unterdruckhaltevorrichtung sind zweiteilig ausgeführt.

Die Unterdruckhalte-Vorrichtung wird nach einer bevorzugten Ausführungsform auf die Anlagefläche gesetzt und die Kolbensaugpumpe mit einer an der unteren Öffnung befindlichen Dichtung auf die Kupplungsfläche mit einem leichten unterstützenden Druck aufgesetzt. Durch Herausziehen der Kolbenstange aus dem Saugrohr wird das Ventil aus der Vorspannung leicht angehoben und die noch vorhandene Atmosphäre aus der Unterdruckkammer weitgehend abgesogen. In dem Moment, in dem der Saugkolben die obere Öffnung passiert, welche vorzugsweise durch das im Querschnitt nach oben offene Rohr selbst gebildet wird, wird das Kegel-/Kugelventil durch die Vorspannung und die nunmehr aufgebaute Druckdifferenz gegen seine Auflagefläche gedrückt und verschließt die Unterdruckkammer gegen den Außendruck luftdicht. Beim Passieren der oberen Öffnung ist es nach dieser Ausführungsform wichtig, dass auf einen Schlag eine große Menge an Umgebungsluft in den Saugkolben eindringt, damit das Ventil der Unterdruck-Haltevorrichtung durch den plötzlichen Druckwechsel schnellstmöglich schließt.

Die Unterdruck-Haltevorrichtung kann durch Öffnen des Ventils wieder leicht von der Anlagefläche entfernt werden. Das Ventil kann geöffnet werden, indem es durch seitlichen Druck, z.B. mit dem Finger, deformiert bzw. bewegt wird, wobei eine Verbindung von Unterdruckkammer mit äußerer Umgebung hergestellt wird und ein Druckausgleich zwischen Umgebungsdruck und Unterdruckkammer bewirkt wird.

Die Haltevorrichtung dient der Anbringung von Utensilien, wie Seifenschalen oder Aufhängehaken, vorzugsweise an Wänden von Nassräumen, wie Badezimmern, Toiletten oder Küchen oder an Glas- oder Kunststoffscheiben. Die Anwendung ist allerdings nicht darauf beschränkt. Voraussetzung ist, dass für die Anbringung luftundurchlässige Untergründe wie z.B. Keramik-, Glas-, Kunststoff- oder Metallflächen zur Verfügung stehen.

Nach einer weiteren bevorzugten Ausgestaltung sind die inneren Wandflächen der Stege, die der Dichtung bzw. dem Dichtring zugewandt sind, und/oder die Dichtung bzw. der Dichtring, dort wo die Dichtung bzw. der Dichtring den Stegen zugewandt ist, klebrig ausgestattet. Nach einer anderen Ausgestaltung wird ein weiterer oder mehrere weitere flache Dichtringe zwischen den inneren Wandflächen der Stege und der Dichtung bzw. dem Dichtring jeweils eingelegt/eingebracht, die jeweils klebrige Oberflächen aufweisen. Die Klebrigkeit ist durch eine repositionierbare Klebstoffmasse, insbesondere eine im Wesentlichen rückstandsfrei und dauerhaft wiederablösbare Klebstoffmasse, wie sie z.B. als "Pressure Sensitive Adhesive" bekannt ist, hergestellt. Die Klebstoffmasse ist z.B. aus Polyurethanen oder Polyacrylaten, ggf. auch geschäumt, hergestellt.

Die Haltevorrichtung besteht vorzugsweise aus Kunststoff.

Die Erfindung wird anhand der Zeichnungen näher erläutert ohne auf diese beschränkt zu sein. Es zeigen:
Fig.1 einen Schnitt durch einen Haltekörper einer lösbaren Haltevorrichtung nach der Erfindung mit Nuten, in die die Stege einer im Profil U-förmigen, elastischen Dichtung in Form eines Dichtungsrings einsetzbar sind. Die Dichtung ist separat abgebildet in Form eines Schnittes durch den U-förmigen Dichtungsring, wobei die Schenkel der Dichtung in die Nuten des Haltekörpers einschiebbar sind.
Fig. 2 einen Schnitt durch einen Haltekörper nach der Erfindung mit jeweils zwei umlaufenden Nuten, in die die Schenkel von zwei konzentrischen, elastischen Dichtungen mit U-Profil einsetzbar sind. Die beiden Dichtung sind separat abgebildet in Form eines Schnittes durch zwei U-förmige Dichtungsringe, wobei die Schenkel der Dichtungen in die Nuten des Haltekörpers einschiebbar sind.
Fig. 3 eine Schnittansicht einer Saugvorrichtung, die im Begriff ist, auf eine Haltevorrichtung aufgesetzt zu werden, mit einem Entlüftungsventil für das Entlüften des Saugrohres beim druckerzeugenden Niederfahren des Saugkolbens.
Fig. 4 eine Schnittansicht einer auf die Haltevorrichtung aufgesetzten Saugvorrichtung mit einem Entlüftungsventil für das Entlüften des Saugrohres beim Unterdruck erzeugenden Hochfahren des Saugkolbens nach dem Aufsetzen des Saugkolbens auf den Haltekörper.
Fig. 5 das Entlüftungsventil in vergrößerter Darstellung im Schnitt.

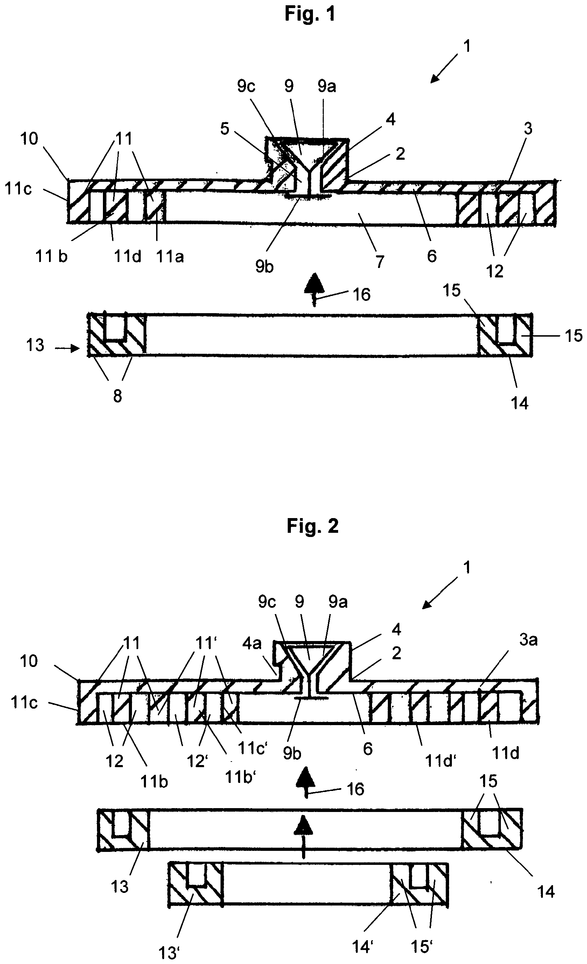

Fig. 1 zeigt im Schnitt die Haltevorrichtung (1) mit einem Haltekörper (2), mit seiner tellerförmigen Grundplatte (3) und mit einer mittig aus dieser herausragenden domartigen Halteaufnahme (4). An der Halteaufnahme (4) sind die Utensilien anbringbar; sie ist dazu mit einer Hinterschneidung (4a) versehen. Die Halteaufnahme (4) hat einen Luftkanal (5).

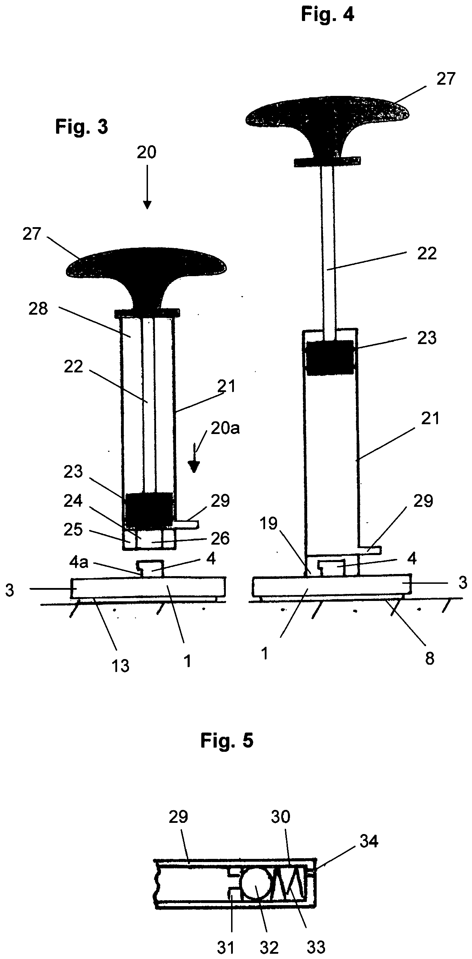

An der Unterseite (6) der Grundplatte (3) bildet sich eine Unterdruckkammer (7) aus, wenn die Grundplatte (3) an eine glatte, als Anlagefläche (8) dienende Wandfläche (Fig. 3 und 4) angesetzt ist. In dem Luftkanal (5) der Halteaufnahme (4) befindet sich ein Ventil (9). Dieses besteht aus einem elastischen Werkstoff, wie Gummi, und hat einen Konus (9a) sowie einen Querriegel (9b); das Ventil (9) ist so ausgelegt, dass der Konus (9a) sich beim Absaugen von Luft aus der Unterdruckkammer (7) von seinem Ventilsitz (9c) abhebt und sich bei Beendigung des Absaugens wieder auf den Sitz (9c) schließend aufsetzt. Der Querriegel (9b) hat die Aufgabe, das Ventil (9) in der Halteaufnahme (4) zu sichern. Am Ende des Lufkanals findet sich eine Öffnung an die eine Unterdruckvorrichtung anschließbar ist.

Mit der Fußfläche (14) der Dichtung wird die Haltevorrichtung dann gegen die Anlagefläche (8) gesetzt, wodurch die Unterdruckkammer (7) entsteht. Wird die Luft aus der Unterdruckkammer (7) abgesaugt, dann saugt sich die Haltevorrichtung (1) an der Wandfläche (8) fest. Die Fußfläche(14) des Dichtungsringes (13) wird dabei zwischen Stegvorderkante (11d) und der Wandfläche (8) zusammen- bzw. festgepresst. Damit ist eine ringförmige Dichtung herbeigeführt.

Bei der in Fig. 1 dargestellten Ausbildung der Erfindung steht von der Unterseite (6) der Grundplatte (3) nach unten ein Randsteg (11 c) und umgeben vom Randsteg (11c) zunächst der umlaufende konzentrische Andrucksteg (11b) und nachfolgend der umlaufende Kammersteg (11a) ab, die zwischen sich Nutringe (12) bilden.

Der Dichtungsring (13) hat ein U-förmiges Profil mit einer Fußfläche (14) und zwei Schenkeln (15). Dieser Dichtungsring (13) wird in Richtung eines Pfeiles (16) in die Unterseite (6) der Grundplatte (3) eingesteckt, wobei sich die Schenkel (15) in die Nutringe (12) des Haltekörpers einschieben. Damit bildet sich unter der Fußfläche (14) eine Anlagefläche (8) der Dichtung (13) auf der Wandfläche (8). Die ausgenommene Fläche in der Dichtung zwischen den Schenkeln kann rechteckig, keilförmig oder andersartig ausgebildet sein, z.B. pilzförmig

Wird nun aus der Unterdruckkammer (7) Luft abgesaugt, dann saugt sich der Haltekörper (2) an der Wandfläche (8) fest. Die Fußfläche (14) wird von der Stegvorderkante (11d) des Anpressdruckstegs zusammengepresst. Die weiteren Stege (Kammersteg und Randsteg) liegen nicht auf der Dichtung auf und liegen auch im angelegten Zustand nicht auf der Anlagefläche auf.

Die Fig. 3 zeigt eine Variante der Ausführungsform nach der Fig. 1, mit einer tellerartigen Grundplatte (3) und einer domartigen Halteaufnahme (4). Es sind weiter auf die Mitte des Haltekörpers (2) zu zwei weitere innere konzentrische Stegringe (11') vorgesehen, zwischen denen sich weitere innere Nutringe (12') ausbilden. Entsprechend dem Dichtungsring (13) nach Fig. 2 ist wieder ein gummielastischer Dichtungsring (13) vorgesehen, der in die Nutringe (12) eingeschoben wird. Zusätzlich gibt es einen weiteren inneren gummielastischen Dichtungsring (13'), der in seiner Form dem Dichtungsring (13) entspricht.

Diese beiden konzentrisch ineinander passenden Dichtungsringe (13 und 13') werden in Richtung der Pfeile (16) in die Unterseite (6) der Grundplatte (3) geschoben, wobei sich alle Schenkel (15 und 15') der Dichtungsringe in die Nutringe (12 und 12') des Haltekörpers schieben. Die Funktion ist dieselbe wie bei Figur 1. Auch das Ventil (9) in der Halteaufnahme (4) entspricht dem nach Fig. 1.

Es ist vorgesehen, dass die in die Nutringe (12, 12') eingeschobenen Schenkel (15) der Dichtungsringe (13, 13') im unbelasteten Zustand mit Spiel in die Nutringe (12, 12') eingreifen. Wenn der Haltekörper (2) aber an die Wandfläche (8) angesetzt ist und die Luft aus der Unterdruckkammer (7) abgesaugt wird, dann entsteht in dem gummiartigen Material der Schenkel (15) ein Staucheffekt, bei dem sich die Schenkel (15) so verdicken, dass sie sich von den Seiten her an die inneren, die Nut bildenden Seitenwände der Stege anpressen.

Der obere Rand der Öffnung des Luftkanals (5) und die darum befindliche kreisförmige, parallel zur Anlagefläche (19) ausgerichtete Fläche bilden Dichtflächen zur Herstellung einer lösbaren luftdichten Kupplung mit einem Saugrohr bzw. einer Kolbensaugpumpe.

Fig. 3 und 4 zeigen Schnittansichten der Unterdruckpumpe (20), mit der der Unterdruck in der Unterdruckkammer (7) erzeugt wird. Die Pumpe (20) hat ein Saugrohr (21), in dem ein von einem Stößel (22) geführter Kolben (23) auf und ab fahrbar ist. Bei beiden Figuren 3 und 4 befinden sich unter dem Saugrohr (21) lösbare Haltevorrichtungen (1), die auf einer Wandfläche (8) aufliegen. Die Wandfläche (8) verläuft nur wegen der besseren Darstellbarkeit horizontal. In der Praxis wird die Wandfläche (8) vorzugsweise vertikal verlaufen.

In Fig. 3 befindet sich die Unterdruckpumpe (21) oberhalb der Haltevorrichtung (1) und wird auf diese zugeführt. Die Unterdruckpumpe (20) hat am unteren Ende (24) des Saugrohres (21) einen Dichtungsring (25) mit einem Durchbruch (26), in den die Halteaufnahme (4) der Haltevorrichtung (1) saugend hineinpasst. Die Unterdruckpumpe (20) wird zum Erzeugen des Unterdruckes in der Unterdruckkammer (7) auf die Halteaufnahme (4) der Haltevorrichtung (1) in Richtung des Pfeiles (20a) aufgesetzt. Wird nun der Kolben (23) mittels des Handgriffes (27) hochgezogen, dann einsteht in der Unterdruckkammer (7) ein Vakuum, das die Haltevorrichtung (1) an der Wandfläche (8) festsaugt. Der Kolben (23) befindet sich dann schließlich am oberen Ende (28) des Saugrohres (21).

Wenn man den Kolben (23) nun bei aufgesetzter Haltevorrichtung (1) niederdrücken wollte, würde sich im Saugrohr (21) ein Luftstau bilden. Um dies zu vermeiden, ist ein in Fig.5 dargestelltes Entlastungsventil (29) vorgesehen. Dieses Entlastungsventil (29) ist an dem unteren Ende (24) des Saugrohres (21) angebracht. Es besteht aus einem Rohrstutzen (30), in dem sich ein Ventilsitz (31) befindet, gegen den von außen eine Kugel (32) oder dgl. mittels einer Druckfeder (33) gedrückt wird. Durch eine Ausströmöffnung (34) kann die Luft entweichen.

Entsteht in dem Saugrohr (21) beim Niederdrücken des Kolbens (23) ein Überdruck, dann kann dieser durch das Entlastungsventil (29) entweichen. Das hat den weiteren Vorteil, dass nachgepumpt werden kann, ohne dass die Unterdruckpumpe (20) abgenommen werden muss.

Nach einer nicht dargestellten Variante der Erfindung ist kein Entlastungsventil (29) vorgesehen und der Kolben weist an seinem oberen Auslass keinen Anschlag auf. Der Kolben kann also aus dem Saugrohr (21) herausgezogen werden.

Zum Herstellen von Unterdruck wird das Saugrohr mit nach unten eingeschobener Kolbenstange auf die Haltevorrichtung aufgesetzt und die Kolbenstange aus dem Kolbenrohr sodann herausgezogen. Wird weiterer Unterdruck benötigt, wird der Vorgang wiederholt. Der untere Durchbruch (26) des Saugrohrs wird durch eine Dichtung in Form eines Dichtungsrings (25) abgeschlossen. Die obere Öffnung wird durch das nach oben offene Saugrohr (21) gebildet. Die Saugpumpe (20) weist weiterhin einen Handgriff (27) und einen Saugkolben (23) auf, der vorzugsweise mit Dichtlippen gegen das Saugrohr abdichtet. Der Saugkolben kann die obere Öffnung passieren.

Zum Lösen der Haltevorrichtung von der Wandfläche wird das Ventil (9) von seinem Ventilsitz (9c) abgehoben. Damit gelangt Luft in die Unterdruckkammer (7) und die Haltevorrichtung (1) löst sich von der Wandfläche (8).

Die Öffnung mit dem Ventilsitz kann durch eine Kappe verschlossen werden, die - z.B. durch Einführen eines Schraubenzieherkopfes - in einen Auslass oder Vorsprung in der Kappe selbst oder in der Fläche (12) abgehebelt werden kann. Die Kappe bewirkt gleichzeitig, dass das Ventil durch die innere Fläche des Kappendeckels zusätzlich abdichtend in die Auflagefläche (8) des Doms gedrückt wird.

## Patentansprüche

1. Unterdruckhaltevorrichtung (1) zum Anbringen von Gegenständen an eine im Wesentlichen gasdichte Anlagefläche (8) aufweisend:
- einen Haltekörper (2), der eine Unterdruckkammer (7) ausbildet, wobei in der Unterdruckkammer (7) nach dem Anlegen an die Anlagefläche (8) ein Unterdruck erzeugbar ist, und der Haltekörper (2) einen die Unterdruckkammer (7) umlaufenden Andrucksteg (11b) mit Stegvorderkante (11d) aufweist, wobei die Stegvorderkante (11 d) zur Anlagefläche (8) hin gerichtet ist,
- zumindest eine Dichtung (13), die die Unterdruckkammer (7) nach außen hin gasdicht gegen die Anlagefläche (8) verschließt,
- zumindest eine Öffnung als Ende einer Verbindung von Unterdruckkammer (7) mit äußerer Umgebung mit zumindest einem Ventil (9), welches ein gasdichtes Schließen und Öffnen der Verbindung Unterdruckkammer mit äußerer Umgebung gewährleist,
wobei
- der Haltekörper (2) mit dem Andrucksteg (11b) bei Ausbildung eines Unterdrucks in der Unterdruckkammer an die Anlagefläche (8) über die zur Anlagefläche (8) hin vorgesehene Dichtung (13) drückt,
- die Dichtung (13) ein oder mehrere U-Profile aufweist, wobei zwei Schenkel (15) und eine die Schenkel verbindende Fußfläche (14) ein U-Profil bildet und die Schenkel (15) den jeweiligen Andrucksteg (11 b) des Haltekörpers (2) beidseitig zumindest teilweise umgreifen und die Fußfläche (14) die jeweilige Stegvorderkante (11d) des Andruckstegs (11b) überspannt, wobei die Stegvorderkante (11d) auf die Fußfläche (14) der Dichtung bei Unterdruck in Richtung auf die Anlagefläche (8) abdichtend einwirkt, und
- der Haltekörper (2) neben dem Andrucksteg (11b) einen nach unten ragenden Randsteg (11c) aufweist, der Randsteg den Andrucksteg umschließt und sich zwischen Andrucksteg (11b) und dem Randsteg (11c) eine Nut (12) ausbildet, in die ein Schenkel (15) der Dichtung eingreift.

2. Unterdruckhaltevorrichtung nach Anspruch 1, wobei der Haltekörper (2) neben dem Andrucksteg (11 b) und dem Randsteg (11 c) weiterhin zur Unterdruckkammer (7) hin aufweist einen nach unten ragenden Kammersteg (11a), der Kammersteg (11a) den Andrucksteg (11b) zum Inneren der Unterdruckkammer (7) hin umschließt und sich zwischen Andrucksteg (11b) und Kammersteg (11a) eine zweite Nut (12) ausbildet, so dass sich zwischen den Stegen (11) und angrenzend an den Andrucksteg (11b) zwei Nuten (12) ausbilden, in die die Schenkel (15) der Dichtung (13) eingreifen.

3. Unterdruckhaltevorrichtung nach einem oder mehreren der vorhergehenden Ansprüche, **dadurch gekennzeichnet, dass** zwei konzentrische, im Profil U-förmig umlaufende Dichtungen (13, 13') vorgesehen sind, deren Schenkel (15, 15') in Nuten (12, 12') zwischen den umlaufenden Stegen (11) eingreifen.

4. Unterdruckhaltevorrichtung nach einem oder mehreren der vorhergehenden Ansprüche, wobei die Schenkel (15) ohne Andruck des Haltekörpers (2) an die Anlagefläche (8) in der oder den Nuten (12, 12') Bewegungsspiel haben, und sich bei vorhandenem Andruck an die Anlagefläche (8) durch einen Staucheffekt der Dichtung (13) so verdicken, dass sich die Schenkel an die Seitenwände der Stege (11), die die Nuten bilden, nur bei Andruck zusätzlich abdichtend anpressen.

5. Unterdruckhaltevorrichtung nach einem oder mehreren der vorhergehenden Ansprüche, wobei das Ventil (9) im Wesentlichen zylindrisch, kegel-, kugel-oder halbkugelförmig ausgebildet ist.

6. Unterdruckhaltevorrichtung nach einem oder mehreren der vorhergehenden Ansprüche, wobei die Verbindung von Unterdruckkammer (7) mit der äußeren Umgebung eine zylindrische, kegel-, kugel- oder halbkugelförmige Auflagefläche zur Aufnahme des Ventils aufweist.

7. Unterdruckhaltevorrichtung nach einem oder mehreren der vorhergehenden Ansprüche, wobei das Ventil zumindest in den Bereichen, die mit dem Ventilsitz in Kontakt stehen, aus einem gummielastischen Material besteht.

8. Unterdruckhaltevorrichtung nach einem oder mehreren der vorhergehenden Ansprüche, wobei das Ventil (9) an einem Ende band- oder stabförmig ausläuft mit einem Widerhalt (9b), insbesondere in Form mindestens eines Querriegels oder Keils, wobei der band- oder stabförmige Fortsatz das Ventil (9) im Ventilsitz festhält, wenn von außen Unterdruck einwirkt.

9. Unterdruckhaltevorrichtung gemäß Anspruch 8, **dadurch gekennzeichnet, dass** der band- oder stabartig Auslauf des Ventils (9) elastisch ist, insbesondere um das Ventil in dem Ventilsitz (9c) unter elastischer Vorspannung zu halten.

10. Unterdruckhaltevorrichtung gemäß einem der vorhergehenden Ansprüche, **dadurch gekennzeichnet, dass** die Unterdruckhaltevorrichtung (1) eine Halteaufnahme (4) zur Gerätehalterung aufweist.

11. Unterdruckhaltevorrichtung gemäß einem der vorhergehenden Ansprüche, **dadurch gekennzeichnet, dass** zumindest Teilflächen zwischen Steg (11) bzw. Andrucksteg (11 b) und Dichtung (13) mit einer repositionierbaren Klebstoffmasse ausgestattet sind bzw. die repositionierbare Klebstoffmasse zwischend die Stege (11) und die Dichtung (13) eingebracht ist.

12. Zweiteiliges Set umfassend die Unterdruck-Haltevorrichtung (1) nach einem der vorhergehenden Ansprüche und eine mit der Öffnung der Unterdruckkammer nach außen gasdicht zeitweilig kuppelbare und wieder lösbare Vorrichtung zum Erzeugen eines Unterdrucks in der Unterdruckkammer.

13. Set gemäß Anspruch 12, wobei die Vorrichtung zum Erzeugen eines Unterdruckes eine Unterdruckpumpe mit Entlastungsventil (29) ist, vorzugsweise eine Hubkolbensaugpumpe.

14. Set gemäß Anspruch 12, wobei die Vorrichtung zum Erzeugen eines Unterdruckes ein Kolbensaugrohr mit Saugrohr (21) und Saugkolben (23) aber ohne Entlastungsventil (29) ist, wobei das Kolbensaugrohr am Anfang des Saugweges eine Öffnung (24) aufweist, die mit der Öffnung der Unterdruckkammer nach außen gasdicht durch Aufsetzen kuppelbar ist und am Ende des Saugweges (28) eine vom Saugkolben (23) passierbare Öffnung, sodass beim Passieren auf einen Schlag Umgebungsluft in das Kolbensaugrohr eindringt.

15. Set gemäß Anspruch 12, 13 oder 14, wobei die Öffnung der Unterdruckkammer nach außen von einer Fläche umgeben ist, die parallel zur Anlagefläche der Unterdruck-Haltevorrichtung ausgerichtet ist, zum Ansetzen der Vorrichtung zum Erzeugen eines Unterdruckes über eine Gummidichtung.

## Claims

1. Vacuum holding device (1) for attaching objects to an essentially gas-tight contact surface (8), comprising:
- a holding body (2) that forms a vacuum chamber (7), wherein a vacuum is producible in the vacuum chamber (7) following application to the contact surface (8), and the holding body (2) comprises a press-on web (11 b) with a web front edge (11d) encircling the vacuum chamber (7), wherein the web front edge (11d) is oriented towards the contact surface (8),
- at least one seal (13), that seals the vacuum chamber (7) towards the exterior in a gas-tight manner against the contact surface (8).
- at least one opening as the end of a connection between the vacuum chamber (7) and the external environment having at least one valve (9) that ensures gas-tight opening and closing of the connection between the vacuum chamber and the external environment,
wherein
- the holding body (2) with the press-on web (11 b), during formation of a vacuum in the vacuum chamber, presses on the contact surface (8) by means of the seal (13) provided towards the contact surface (8),
- the seal (13) comprises one or several U-profiles, wherein two limbs (15) and a foot surface (14) linking the limbs form an U-profile and the limbs (15) at least partially bilaterally encompass the respective press-on web (11b) of the holding body (2) and the foot surface (14) spans the respective web front edge (11d) of the press-on web (11b), wherein the web front edge (11d) has a sealing effect on the foot surface (14) of the seal under a vacuum in the direction of the contact surface (8), and
- the holding body (2), in addition to the press-on web (11 b) comprises a downwards projecting peripheral web (11 c), the peripheral web encircles the press-on web and a groove (12) is formed between the press-on web (11 b) and the peripheral web (11c), in which a limb (15) of the seal engages.

2. Vacuum holding device according to claim 1, wherein the holding body (2), in addition to the press-on web (11b) and the peripheral web (11 c) furthermore comprises in the direction of the vacuum chamber (7) a downwards projecting chamber web (11 a), the chamber web (11 a) encircles the press-on web (11 b) towards the inside of the vacuum chamber (7) and a second groove (12) is formed between the press-on web (11 b) and the chamber web (11 a), so that two grooves (12) are formed between the webs (11) and adjacent to the press-on web (11b), in which the limbs (15) of the seal (13) engage.

3. Vacuum holding device according to one or several of the above claims, **characterised in that** two concentric encircling seals (13, 13') which are U-shaped in profile are provided, the limbs of which (15, 15') engage in grooves (12, 12') between the encircling webs (11).

4. Vacuum holding device according to one or several of the above claims, wherein the limbs (15) without contact pressure of the holding body (2) on the contact surface (8) have play of movement in the groove or grooves (12, 12') and in the presence of contact pressure on the contact surface (8) thicken via a compression effect of the seal (13) such that the limbs press against the side walls of the webs (11) that form the grooves only in case of contact pressure, creating an additional seal.

5. Vacuum holding device according to one or several of the above claims, wherein the valve (9) is essentially designed as cylindrical, conical, spherical or hemispherical in shape.

6. Vacuum holding device according to one or several of the above claims, wherein the connection between the vacuum chamber (7) and the external environment comprises a cylindrical, conical, spherical or hemispherical support surface for receiving the valve.

7. Vacuum holding device according to one or several of the above claims, wherein the valve consists of an elastic rubber material at least in the areas that are in contact with the valve seat.

8. Vacuum holding device according to one or several of the above claims, wherein the valve (9) extends at one end in the manner of a band or a rod with a resistance (9b), particularly in the form of at least one crossbar or wedge, wherein the band or rod-shaped extension of the valve (9) is held tight in the valve seat when vacuum is exerted from outside.

9. Vacuum holding device according to claim 8, **characterised in that** the band or rod-like outlet of the valve (9) is elastic, particularly in order to keep the valve seat (9c) under elastic pretension.

10. Vacuum holding device according to any of the above claims, **characterised in that** the vacuum holding device (1) comprises a retaining receptacle (4) for the device mounting.

11. Vacuum holding device according to any of the above claims, **characterised in that** at least subareas between the web (11) and press-on web (11 b) and the seal (13) are equipped with a repositionable adhesive compound and/or the repositionable compound is introduced between the webs (11) and the seal (13).

12. Two-part set comprising the vacuum holding device (1) according to any of the above claims and an intermittently connectable and detachable device, gas-tight with the opening of the vacuum chamber towards the exterior, for generating a vacuum in the vacuum chamber.

13. Set according to claim 12, wherein the device for generating a vacuum is a vacuum pump with a relief valve (29), preferably a piston suction pump.

14. Set according to claim 12, wherein the device for generating a vacuum is a piston suction tube with a suction tube (21) and a suction piston (23) but without a relief valve (29), wherein the piston suction tube comprises an opening (24) at the beginning of the suction path, which is connectable by attachment to the opening of the vacuum chamber towards the exterior in a gas-tight manner and at the end of the suction path (28) an opening (23) passable by the suction piston, so that in passing, ambient air penetrates into the suction piston at one go.

15. Set according to claim 12, 13 or 14, wherein the opening of the vacuum chamber is surrounded towards the exterior by a surface oriented parallel to the contact surface of the vacuum holding device, for applying the device for generating a vacuum by means of a rubber seal.

## Revendications

1. Dispositif de retenue à dépression (1) pour fixer des objets sur une surface d'appui (8) sensiblement étanche aux gaz, comprenant :
- un corps de retenue (2) qui forme une chambre à vide (7), un vide étant apte à être produit dans la chambre à vide (7) après l'application sur la surface d'appui (8), et le corps de retenue (2) comprenant une traverse de pression (11b) autour de la chambre à vide (7) avec un bord avant de traverse (11d), le bord avant de traverse (11d) étant orienté vers la surface d'appui (8) ;
- au moins un joint (13) qui ferme la chambre à vide (7) vers l'extérieur d'une manière étanche aux gaz contre la surface d'appui (8) ;
- au moins une ouverture en tant qu'extrémité d'une liaison entre la chambre à vide (7) et l'environnement externe, ayant au moins une soupape (9) qui assure une ouverture et fermeture étanche aux gaz de la liaison entre la chambre à vide et l'environnement externe,
suivant lequel
- le corps de retenue (2) avec la traverse de pression (11b), lors de la formation d'un vide dans la chambre à vide, appuie sur la surface d'appui (8) au moyen du joint (13) disposé vers la surface d'appui (8) ;
- le joint (13) comporte un ou plusieurs profils en U, deux branches (15) et une surface de pied (14) reliant les branches formant un profil en U et les branches (15) enveloppant au moins partiellement des deux côtés la traverse de pression respective (11b) du corps de retenue (2) et la surface de pied (14) recouvrant le bord avant de traverse respectif (11d) de la traverse de pression (11b), le bord avant de traverse (11d) exerçant un effet d'étanchéité sur la surface de pied (14) du joint sous un vide dans la direction de la surface d'appui (8) ; et
- le corps de retenue (2), en plus de la traverse de pression (11b), comprend une traverse de bordure (11d) se projetant vers le bas, la traverse de bordure entoure la traverse de pression et une rainure (12) est formée entre la traverse de pression (11b) et la traverse de bordure (11c), rainure dans laquelle une branche (15) du joint s'engage.

2. Dispositif de retenue à dépression selon la revendication 1, suivant lequel le corps de retenue (2), en plus de la traverse de pression (11b) et de la traverse de bordure (11c), comprend en outre dans la direction de la chambre à vide (7) une traverse de chambre (11a) se projetant vers le bas, la traverse de chambre (11a) entoure la traverse de pression (11b) vers l'intérieur de la chambre à vide (7) et une seconde rainure (12) est formée entre la traverse de pression (11b) et la traverse de chambre (11a), de telle sorte deux rainures (12) sont formées entre les traverses (11) et adjacentes à la traverse de pression (11b), dans lesquelles rainures les branches (15) du joint s'engagent.

3. Dispositif de retenue à dépression selon l'une ou plusieurs des revendications précédentes, **caractérisé par le fait que** deux joints (13, 13') périphériques, en forme de U en profil, concentriques, sont prévus, dont les branches (15, 15') s'engagent dans des rainures (12, 12') entre les traverses périphériques (11).

4. Dispositif de retenue à dépression selon l'une ou plusieurs des revendications précédentes, suivant lequel les branches (15) sans pression d'appui du corps de retenue (2) sur la surface d'appui (8) ont un jeu de déplacement dans la ou les rainures (12, 12'), et en présence de la pression d'appui sur la surface d'appui (8) s'épaississent par un effet de compression du joint (13) de telle sorte que les branches appuient contre les parois latérales des traverses (11) qui forment les rainures seulement en cas de pression d'appui, créant un effet d'étanchéité supplémentaire.

5. Dispositif de retenue à dépression selon l'une ou plusieurs des revendications précédentes, suivant lequel la soupape (9) est conçue sensiblement sous forme cylindrique, conique, sphérique ou semi-sphérique.

6. Dispositif de retenue à dépression selon l'une ou plusieurs des revendications précédentes, suivant lequel la liaison entre la chambre à vide (7) et l'environnement externe comprend une surface portante cylindrique, conique, sphérique ou semi-sphérique pour la réception de la soupape.

7. Dispositif de retenue à dépression selon l'une ou plusieurs des revendications précédentes, suivant lequel la soupape consiste en une matière ayant l'élasticité du caoutchouc au moins dans les régions qui sont en contact avec le siège de soupape.

8. Dispositif de retenue à dépression selon l'une ou plusieurs des revendications précédentes, suivant lequel la soupape (9) se prolonge à une extrémité à la manière d'une bande ou d'une tige avec une retenue (9b), en particulier sous la forme d'au moins un verrou transversal ou d'un coin, le prolongement sous forme de bande ou de tige retenant la soupape (9) dans le siège de soupape lorsque le vide est exercé depuis l'extérieur.

9. Dispositif de retenue à dépression selon la revendication 8, **caractérisé par le fait que** le prolongement sous forme de bande ou de tige de la soupape (9) est élastique, en particulier pour maintenir la soupape dans le siège de soupape (9c) sous précontrainte élastique.

10. Dispositif de retenue à dépression selon l'une ou plusieurs des revendications précédentes, **caractérisé par le fait que** le dispositif de retenue à dépression (1) comprend un logement de retenue (4) pour le maintien des appareils.

11. Dispositif de retenue à dépression selon l'une ou plusieurs des revendications précédentes, **caractérisé par le fait qu'**au moins des sous-surfaces entre la traverse (11) ou la traverse de pression (11b) et le joint (13) sont équipées d'une masse adhésive repositionnable ou la masse adhésive repositionnable est introduite entre les traverses (11) et le joint (13).

12. Ensemble en deux parties comprenant le dispositif de retenue à dépression (1) selon l'une des revendications précédentes et un dispositif apte à être relié et détaché par intermittence, de façon étanche aux gaz avec l'ouverture de la chambre à vide vers l'extérieur, pour générer un vide dans la chambre à vide.

13. Ensemble selon la revendication 12, suivant lequel le dispositif de génération d'un vide est une pompe à vide avec une soupape de décharge (29), de préférence une pompe à piston alternatif.

14. Ensemble selon la revendication 12, suivant lequel le dispositif de génération d'un vide est un tube d'aspiration à piston avec un tube d'aspiration (21) et un piston d'aspiration (23) mais sans soupape de décharge (29), le tube d'aspiration à piston comprenant une ouverture (24) au début du trajet d'aspiration, laquelle ouverture est apte à être reliée par fixation à l'ouverture de la chambre à vide vers l'extérieur d'une manière étanche aux gaz, et à la fin du trajet d'aspiration (28) une ouverture dans laquelle peut passer le piston d'aspiration (23), de telle sorte que, lors du passage, de l'air ambiant pénètre dans le tube d'aspiration à piston d'un trait.

15. Ensemble selon l'une des revendications 12, 13 ou 14, suivant lequel l'ouverture de la chambre à vide est entourée vers l'extérieur par une surface, qui est orientée parallèlement à la surface d'appui du dispositif de retenue à dépression, pour appliquer le dispositif de génération d'un vide au moyen d'un joint en caoutchouc.
